# EUROPEAN PATENT SPECIFICATION

(11) **EP 3 032 362 B1**
(45) Date of publication and mention of the grant of the patent: **20.03.2019**
(21) Application number: 14196827.1
(22) Date of filing: 08.12.2014
(51) Int. Cl.: G05B 19/042

(54) **Automatic generation of hardware configuration for an automation system**
Automatische Erzeugung von Hardwarekonfiguration für ein Automatisierungssystem
Génération automatique de configuration matérielle d'un système d'automatisation

(43) Date of publication of application: 15.06.2016
(73) Proprietor: Siemens Aktiengesellschaft, 80333 München (DE)
(72) Inventor: Kumar, Naveen, 560017 Bangalore-Karntaka (IN); Nataraj, Archana, 5600019 Bangalore (IN); Ramanathan, Rathinakumar, 560068 Bangalore-Karnataka (IN); Rebello, Jessel, 560034 Bangalore-Karnataka (IN); Tiruveedula, Bhaskar Babu, 560029 Bangalore-Karnataka (IN); Varagamurthy, Ishwarya, 560038 Bangalore-Karnataka (IN); Vidyarthi, Amit Kumar, 560048 Bangalore (IN); Kumar, Prashant, 560095 Bangalore-Karnataka (IN)
(74) Representative: Isarpatent

(56) References cited:
- US-A1- 2006 168 183

## Description

The present invention relates to the automatic generation of a hardware configuration for an automation system.

An automation system, such as industrial automation system in an industrial setting, comprises a plurality of hardware devices such as programmable logic controllers (PLCs), sensors, field devices, interface modules, Input/Output (I/O) links, network switches, communication processors, etc. The hardware devices are responsible for overall operation of the industrial setting. To ensure proper functioning of the industrial setting, a hardware configuration is generated and loaded on a main PLC which is responsible for monitoring and controlling functions of other hardware devices of the industrial automation system. The hardware configuration is a graphical representation of a layout of hardware devices of the industrial automation system. Hardware configurations are typically created using an engineering system provided on an engineering station. The engineering system provides an engineering graphical user interface (GUI) editor which facilitates a user to create hardware configurations. In the engineering GUI editor, engineering objects corresponding to hardware devices are activated and transferred from an engineering object database into an editor window, and connections are established between the engineering objects to form a desired hardware configuration. For example, connections established between the engineering objects may include a multi-point interface connection, a Profibus decentral peripheral connection, a ProfiNET connection, an Actuator sensor interface connection, a Profibus process automation connection, a point-to-point connection, etc. Thereafter, values of parameter attributes are set for each of the engineering objects corresponding to the hardware devices to create a desired hardware configuration.

The desired hardware configuration can be regular hardware configuration or complex hardware configuration. The complex hardware configuration typically comprises a plurality of hardware devices such as PLCs, Decentral Devices like Interface Modules, Switches, I/O links, etc. connected in an automation network. For example, the complex hardware configuration such as direct data exchange configuration may comprise of one or more PLCs connected to each other. In case of the direct data exchange configuration, one PLC act as master, other PLCs act as publisher and receiver.

Once the desired hardware configuration is created, method and mode of data transfer between the PLCs is configured. For example, the method and mode of data transfer is configured using an I/O communication table by setting type and size of data to be transmitted and received along with configuring sender PLC and receiver PLC, mode of transfer, and address information of sender and receiver PLCs.

Currently, a user of the engineering station manually creates a complex hardware configuration. A lot of time and effort is wasted in manually creating complex hardware configurations for the entire automation system comprising thousands of hardware devices. Also, the user needs to possess expertise in creating complex hardware configuration. In case of lack of expertise, the complex hardware configuration created by the user may turnout to be erroneous or inconsistent which cannot be compiled and downloaded onto the main PLC of the automation system.

US20060168183 discloses a method and system for determining and merging differences between configuration diagrams. According to US20060168183, first and second information may be analyzed to determine differences between the first and second configuration diagrams, and an indication of the determined differences between the first and second configuration diagrams may be displayed on a display device.

In light of the foregoing, there is a need to automate generation of hardware configuration for an automation system.

Therefore, it is the object of the present invention to provide a method and system which facilitates automated generation of the hardware configuration for the automation system. This object is solved by a method of claim 1 and a system of claim 9. Further advantageous improvements and embodiments of the invention are listed in the dependent claims. Hereinafter, first of all some general aspects of the invention are listed below.

The object of the present invention is achieved by providing a method of automatically generating a hardware configuration for an automation system. The method comprises determining type of the hardware configuration being created for the automation system. The method further comprises identifying at least one structural representation of the hardware configuration from a plurality of structural representations in a structural representation database based on the determined type of the hardware configuration. The structural representation is a hierarchical structure of the hardware configuration. The method also comprises obtaining said structural representation from the structural representation database. Furthermore, the method comprises displaying said structural representation as a graphical outline of the hardware configuration on a graphical user interface, wherein the graphical outline comprises a plurality of blocks representing elements of the hardware configuration. Moreover, the method comprises generating the hardware configuration according to the at least one structural representation. Thus, a hardware configuration for an automation system can be easily created using the structural representation. Advantageously, time and effort required to create the hardware configuration is significantly reduced. Also, errors in the hardware configuration due to lack of expertise are reduced significantly.

Therein, the method comprises identifying said at least one structural representation associated with the type of hardware configuration from the plurality of structural representations.

Therein, the method comprises activating and transferring said structural representation of the hardware configuration into an editor window based on selection of said structural representation. The method further comprises assigning appropriate engineering objects to the corresponding blocks of the graphical outline from an object library window. The engineering objects represent hardware devices of the automation system. Furthermore, the method comprises setting values of a set of parameter attributes associated with each of the hardware devices. Thus, need for manually setting values of the parameter attributes is eliminated. Advantageously, time and effort required for setting values of parameter attributes across different hardware devices is significantly reduced.

Therein, the method comprises determining parameter attributes of one or more hardware devices which best matches with the set of parameter attributes of said each of the hardware devices, and applying pre-stored values of the parameter attributes of the one or more hardware devices to the corresponding set of parameter attributes of at least one of the hardware devices.

Therein, the method comprises selecting two or more engineering objects in the hardware configuration being created. The method also comprises determining a priority to be applied for merging of values of the set of parameter attributes of the hardware devices corresponding to the two or more engineering objects needs to be performed. Moreover, the method comprises merging values of the set of parameter attributes of the hardware devices according to the determined priority.

Therein, the method comprises generating one or more structural representations of hardware configurations, and storing the one or more structural representations of the hardware configurations in the structural representation database. Thus, new structural representations can be created and stored in the structural representation database. Advantageously, the new structural representations can be reused for creating hardware configurations.

Therein, the method comprises editing at least one of the plurality of structural representations stored in the structural representation database. Thus, need to create structural representations afresh is eliminated as the existing structural representation can be edited and reused. Advantageously, time and effort required to recreate the structural representations is saved.

The object of the present invention is also achieved by an engineering station comprising a processor, and a memory coupled to the processor. The memory comprises an engineering application stored in the form of machine-readable instructions and executable by the processor. The engineering application is capable of determining type of hardware configuration being created for an automation system. The engineering application is also capable of identifying at least one structural representation of the hardware configuration from a plurality of structural representations in a structural representation database based on the determined type of the hardware configuration. The at least one structural representation is a hierarchical structure of the hardware configuration. Furthermore, the engineering application is capable of obtaining the at least one structural representation from the structural representation database. Also, the engineering application is capable of displaying said structural representation as a graphical outline of the hardware configuration on a graphical user interface. The graphical outline comprises a plurality of blocks representing elements of the hardware configuration. Additionally, the engineering application is capable of generating the hardware configuration according to the at least one structural representation.

Therein, the engineering application is capable of identifying said at least one structural representation associated with the type of hardware configuration from the plurality of structural representations.

Therein, the engineering application is capable of activating and transferring said structural representation of the hardware configuration into an editor window based on selection of said structural representation. Furthermore, the engineering application is capable of assigning appropriate engineering objects to the corresponding blocks of the graphical outline from an object library window. The engineering objects represent hardware devices of the automation system. Moreover, the engineering application is capable of setting values of a set of parameter attributes associated with each of the hardware devices.

Therein, the engineering application is capable of determining parameter attributes of one or more hardware devices which best matches with the set of parameter attributes of said each of the hardware devices, and applying pre-stored values of the parameter attributes of the one or more hardware devices to the corresponding set of parameter attributes of at least one of the hardware devices.

Therein, the engineering application is capable of selecting two or more engineering objects in the hardware configuration being created. The engineering application is further capable of determining a priority to be applied for merging of values of the set of parameter attributes of the hardware devices corresponding to the two or more engineering objects needs to be performed. For example, the priorities may include 'hardware device(s) whose parameter attributes are configured very frequently', 'hardware device(s) whose parameter attributes are configured recently', 'hardware device(s) having most number of parameter attributes configured', and 'hardware device(s) based on its firmware version'. Furthermore, the engineering application is capable of merging values of the set of parameter attributes of the hardware devices according to the determined priority.

Therein, the engineering application is capable of generating one or more structural representations of hardware configurations, and storing the one or more structural representations of the hardware configurations in the structural representation database.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a block diagram illustrating an exemplary engineering station configured for generating hardware configuration for an automation system according to an embodiment of the present invention;
- FIG 2: is a process flowchart illustrating an exemplary method of generating structural representations of hardware configurations according to an embodiment of the present invention;
- FIG 3: is a process flowchart illustrating an exemplary method of generating the hardware configuration for the automation system using structural representations according to one embodiment of the present invention;
- FIG 4: illustrates a block diagram of a distributed control system capable of dynamically recommending structural representations for use in creating the hardware configuration for the automation system according to one embodiment of the present invention;
- FIGs 5A-F: are screenshot views illustrating a process of generating a direct data exchange configuration for an automation system according to an embodiment of the present invention;
- 'FIG 6: is a process flowchart illustrating an exemplary method of automatically performing parameterization for a selected hardware device in the hardware configuration being created according to one embodiment of the present invention; and
- FIG 7: is a process flowchart illustrating an exemplary method of automatically performing parameterization for hardware devices in the hardware configuration being created according to another embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

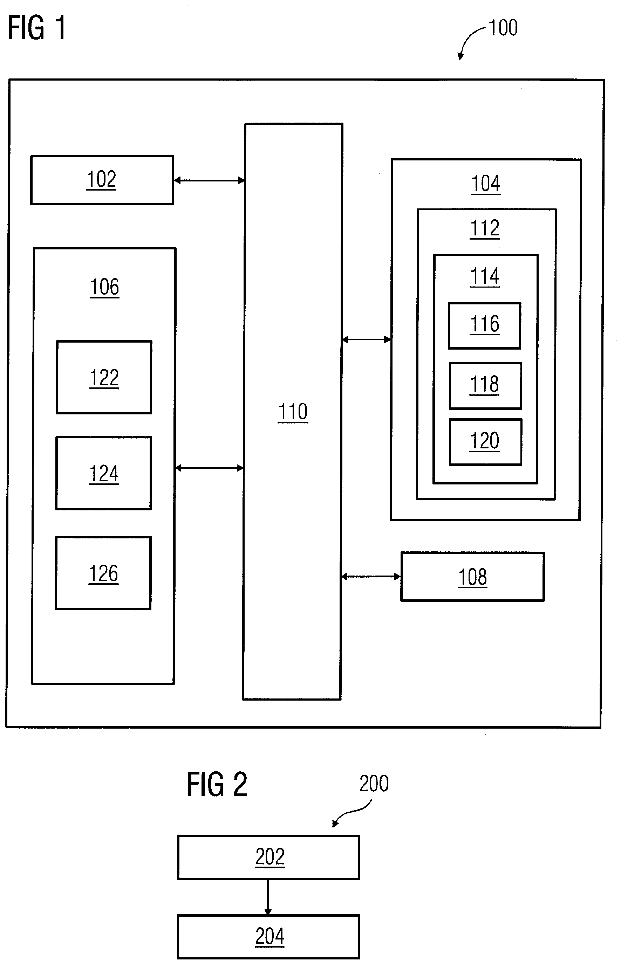

FIG 1 is a block diagram illustrating an exemplary engineering station 100 configured for generating hardware configuration for an automation system according to an embodiment of the present invention. The engineering station 100 may be a desktop computer, a laptop computer, a server computer, a tablet and the like. In FIG 1, the engineering station 100 comprises a processor 102, a memory 104, a storage unit 106, input/output devices 108, and a bus 110.

The processor 102, as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit. The processor 102 may also include embedded controllers, such as generic or programmable logic devices or arrays, application specific integrated circuits, single-chip computers, and the like.

The memory 104 may be volatile memory and non-volatile memory. A variety of computer-readable storage media may be stored in and accessed from the memory 104. The memory 104 may include any suitable elements for storing data and machine-readable instructions, such as read only memory, random access memory, erasable programmable read only memory, electrically erasable programmable read only memory, hard drive, removable media drive for handling compact disks, digital video disks, diskettes, magnetic tape cartridges, memory cards, and the like. As depicted, the memory 104 comprises the engineering application 112 stored in the form of machine-readable instructions on any of the above-mentioned storage media and may be executed by the processor 102. For example, when executed by the processor 102, the engineering application 112, cause the processor 102, to provide an engineering graphical user interface (GUI) editor for creating hardware configurations for the automation system such as an industrial automation system deployed in an industrial setting. The engineering GUI editor provides an editor window which displays a hardware configuration being created for the automation system, a structure recommendation window which displays recommended structural representations of hardware configuration, and an object library window which displays engineering objects representing hardware devices in the automation system suitable for use in the hardware configuration. The structural representations are hierarchical structures of the hardware configuration. The hardware devices comprise programmable logic controllers, Input/Output (I/O) devices, Intelligent Slave (iSlave) device, field devices, etc.

The engineering application 112 comprises a hardware configuration module 114. The hardware configuration module 114 comprises a structure recommendation module 116, a configuration generation module 118, and a parameterization module 120. The structure recommendation module 116 determines type of the hardware configuration being created for the automation system. For example, the hardware configuration may be a regular hardware configuration or a complex hardware configuration. In an exemplary implementation, the complex hardware configuration may be one of Intelligent Slave (ISlave) configuration, Intelligent Device (IDevice) configuration, Media Redundancy Protocol domain configuration and direct data exchange configuration. It is understood that the complex hardware configuration may be any other hardware configuration well known in the art. In an embodiment, the type of the hardware configuration is determined based on an engineering object selected by user from the object library window for creating the hardware configuration. For example, the engineering object selected by the user may be a specific type Central Processing Unit (CPU), past user activity, properties of the CPU, features of the CPU and so on. For example, past user activity may indicate that direct data exchange configuration was previously created using the selected CPU. In such case, the structure recommendation module 116 would determine that the hardware configuration being created is direct data exchange configuration. In case, the past user activity is considered for determining the type of hardware configuration based on the selected CPU, then the structure recommendation module 116 may record the user activity in the structural recommendation database 122. For instance, the user activity may indicate the type of hardware configuration created by the user and the CPU used.

In case type, properties, or features of the CPU are considered for determining the type of hardware configuration, the structure recommendation module 116 maintains data indicating type of hardware configurations supported by each of the CPU based on the type, properties or features respectively in the structural representation database 122. For example, this is possible since CPUs which PROFINET protocol are suitable for IDevice configuration. Similarly, the CPUs which support PROFIBUS protocol are suitable for ISlave configuration. Thus, when the CPU is selected for creating the hardware configuration, the structure recommendation module 116 determines the type of hardware configuration supported by the selected CPU using the data stored in the structural representation database 122.

The structure recommendation module 116 identifies one or more structural representations from a plurality of structural representations stored in a structural representation database 122 based on the determined type of hardware configuration. For example, the structure recommendation module 116 identifies one or more structural representations associated with the direct data exchange configuration for recommending to the user.

Accordingly, the structure representation module 116 obtains and displays the one or more structural representations in the structure recommendation window. The user may select one of the recommended structural representations for creating the hardware configuration. For example, the user may drag and drop the desired recommended structural representation from the structure recommendation window to the editor window. Based on the selection, the configuration generation module 118 activates and transfers the selected structural representation of the hardware configuration into the editor window. Consequently, the configuration generation module 118 displays the selected structural representation as a graphical outline of the hardware configuration in the editor window. The graphical outline comprises a plurality of blocks representing elements of the hardware configuration.

The configuration generation module 118 allows the user to select appropriate engineering objects for assigning to the corresponding blocks of the graphical outline from the object library window. The engineering objects correspond to the hardware devices in the automation system. For example, if the hardware configuration is direct data exchange type configuration, the engineering objects may represent CPUs which acts as master, publisher and receiver in the automation system. When the user selects the engineering objects, the configuration generation module 118 assigns each of the engineering objects to the corresponding blocks of the structural representation.

The parameterization module 120 sets values of a set of parameter attributes associated with each of the hardware devices corresponding to the engineering objects using a parameterization window. In one embodiment, the parameterization module 120 enables the user to manually set values of the set of parameter attributes associated with each of the hardware devices. In another embodiment, the parameterization module 120 automatically sets the values of the set of parameter attributes of the hardware devices using pre-stored values of similar parameter attributes.

In an exemplary implementation, the parameterization module 120 determines parameter attributes of one or more hardware devices which best matches with the set of parameter attributes of said each of the hardware devices and applies pre-stored values of the best matching parameter attributes to the set of parameter attributes of at least one of the hardware devices. It can be noted that the one or more hardware devices may be of same type as that of the hardware devices associated with the engineering objects used in the hardware configuration being created. In another exemplary implementation, the parameterization module 120 selects two or more engineering objects in the hardware configuration being created and determines priority order in which merging of values of the set of parameter attributes of the hardware devices corresponding to the two or more engineering objects needs to be performed. Accordingly, the parameterization module 120 merges values of the set of parameter attributes of the hardware devices according to the priority order. In this manner, the hardware configuration is automatically created. Thus, time and effort required to create the hardware configuration afresh is significantly reduced by recommending structural representation of hardware configuration being created. The hardware configuration thus created is complied in a desired format and downloaded for use on a main programmable logic controller in the automation system.

In accordance with the foregoing description, the structure recommendation module 118 enables the user to generate one or more structural representation of different hardware configurations in the structural representation database 122. As the structural representations are generated, the structure recommendation module 118 automatically stores the structural representations in the structural representation database 122. Thus, the user can reuse the structural representations created by him/her in the future. Additionally, the structural recommendation module 118 enables the user to edit at least one of the plurality of structural representations stored in the structural representation database 122.

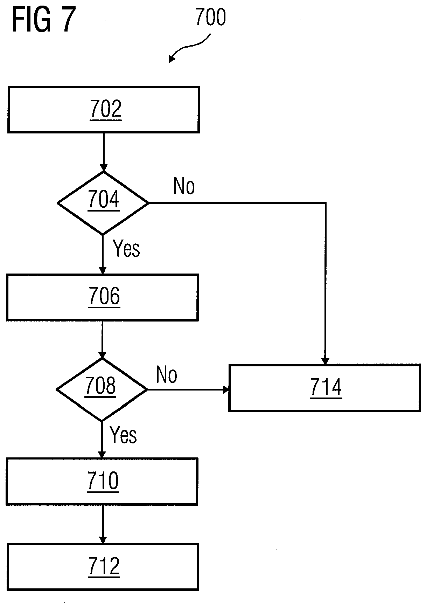

The storage unit 106 may be a non-transitory storage medium configured for storing databases. For example, the storage unit 106 contains the structural representation database 122, an engineering object database 124, and a parameterization database 126. The structural representation database 122 stores structural representations of different types of hardware configurations for the automation system. The structural representations may be stored as hierarchical data structure. The hierarchical data structure contains unique identifier, type information and parameterization required to arrive at a desired hardware configuration. For example, in case of direct data exchange type configuration with three CPUs, the unique identifier may be 'direct data exchange (Master, two ISlaves)', type information may be three CPUs with PROFIBUS support and parameter information may be operating mode type associated with each of the three CPU, i.e., single CPU configured as 'Master' and other CPUs configured as 'Slave'. The engineering object database 124 stores engineering objects representing hardware devices in the automation system. The parameterization database 122 stores values of parameter attributes set for hardware devices of the automation system. The parameterization database 122 also contains information such as list of hardware devices whose parameter attributes are configured more frequently, hardware devices whose parameter attributes are configured recently, hardware devices having most number of parameter attributes configured, and hardware devices based on its firmware version priority. This information assists in determining priority associated hardware modules during merging of parameter attributes of hardware devices as described in FIG 7.

The input/output unit 108 may include keyboard, keypad, monitor, touch sensitive display screen, mouse and the like. The input/output unit 108 enable the user to interface with the engineering station 100 during creation of the hardware configuration. For example, the input unit may enable drag and drop engineering objects representing hardware devices in the automation system from the object library window into the editor window. The output unit may be graphical user interface screen which displays the editor window, structure recommendation window, and the object library window. The bus 110 may acts as ,an interface between the processor 102, the memory 104, the storage unit 106 and the input/output unit 108.

FIG 2 is a process flowchart 200 illustrating an exemplary method of generating structural representation of hardware configuration according to an embodiment of the present invention. At step 202, one or more structural representations of different hardware configurations are generated using the engineering station 100. The structural representation is a hierarchical structure of hardware configuration. The hierarchical structure is generated by defining unique identifier, type information and parameterization required to arrive at the hardware configuration. At step 204, the one or more structural representations of different hardware configurations are automatically stored in the structural representation database 122. The structural representations are stored so that the structural representation can be reused to create desired hardware configuration for an automation system at the engineering station 100. This saves a lot of time in creating the hardware configuration as user need to add engineering objects corresponding to hardware devices in the automation system to the structural representation to create the hardware configuration. It can be noted that, the structural representations can be edited by the user as desired.

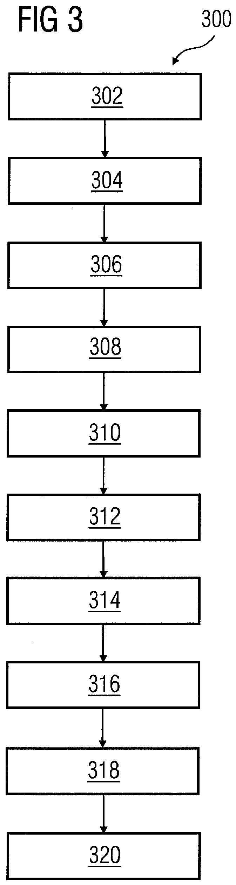

FIG 3 is a process flowchart 300 illustrating an exemplary method of generating hardware configuration using structural representations according to one embodiment of the present invention. At step 302, type of hardware configuration being created for an automation system is determined. For example, type of the hardware configuration being created is determined based on type of engineering object selected by the user. If the user selects a specific type of CPU, then the type of hardware configuration being created is determined as direct data exchange configuration.

At step 304, one or more structural representations of the hardware configuration are identified from a plurality of structural representations based on the determined type of hardware configuration. For example, if the type of hardware configuration is direct data exchange configuration, then structural representations of various types of direct data exchange configurations are identified from the plurality of structural representations in the structural representation database 122.

At step 306, the one or more structural representations are obtained from the structural representation database 122. For example, the unique identifier information, the type information and the parameterization information associated with each of the structural representations are obtained from the structural representation database 122. At step 308, the one or more structural representations are displayed in a structure recommendation window. For example, graphical objects representing the structural representations are displayed in the structural recommendation window.

At step 310, a structural representation is activated and transferred from the structure recommendation window to an editor window. For example, when the user selects desired structural representation displayed in the structure recommendation window through a drag and drop action, the structural representation is activated and transferred into the editor window. Accordingly, at step 312, the structural representation is displayed as a graphical outline of the hardware configuration based on the unique identifier, the type information and the parameterization information associated with the structural representation. The graphical outline comprises blocks which elements of the hardware configurations. Each of these blocks are connected via connection objects. For example, in case of direct data exchange configuration (1 master, 2 iSlaves, the graphical outline comprises a block associated with a master CPU, two blocks associated with slave CPUs and connection objects connecting the three blocks.

At step 314, appropriate engineering objects representing hardware devices in the automation system are assigned to the corresponding blocks of the graphical outline. For example, in the direct data exchange configuration, an engineering object representing a master CPU is assigned to the master CPU block, and engineering objects representing iSlaves are assigned to the slave CPU blocks in the graphical outline. This can be achieved by dragging and dropping the appropriate engineering objects from the object library window into the corresponding blocks displayed in the editor window.

At step 316, values of set of parameter attributes associated with each of the hardware devices corresponding to the assigned engineering objects are assigned. For example, in case of direct data exchange configuration, values of parameter attributes associated with the master CPU and Slave CPUs are assigned. The manner in which the values of the parameter attributes are set is provided in the description that follows.

'At step 318, method of data transfer between the sender hardware device and the receiver hardware device is set in the hardware configuration. At step 320, mode of data-transfer between the hardware devices and address information of sender and receiver hardware devices is configured in the hardware configuration. The steps 318 and 320 are applicable in certain types of hardware configuration such as complex hardware configuration.

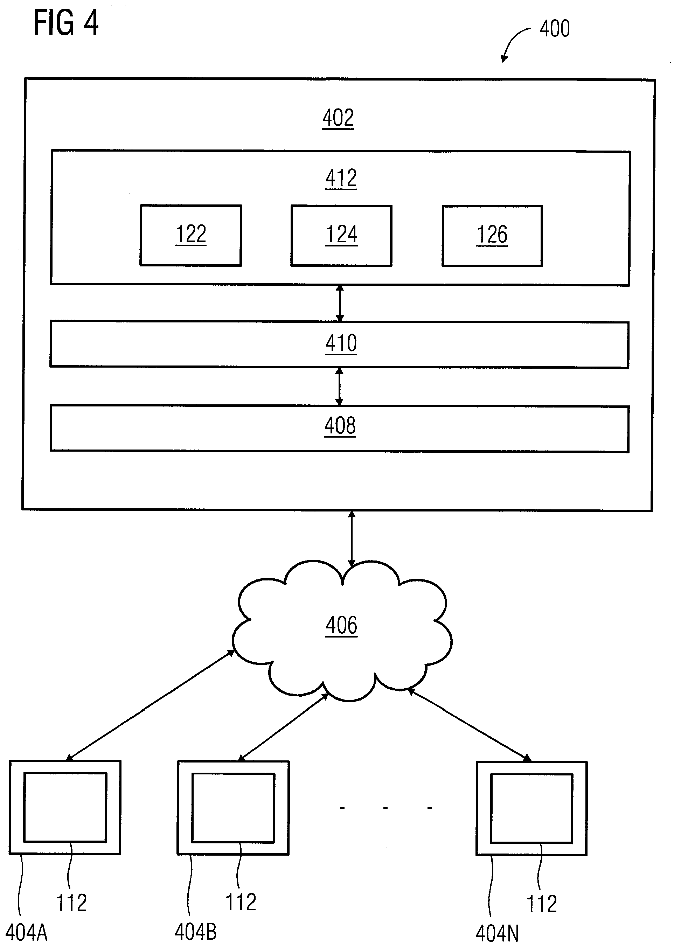

FIG 4 illustrates a block diagram of a distributed control system 400 capable of dynamically recommending structural representation for use in creating hardware configuration for an automation system according to one embodiment of the present invention. The distributed control system 400 comprises a server 402, client devices 404A-N and a network 406. Each of the client devices 404A-N is communicatively coupled to the server 402 via the network 406.

The server 402 may be cloud computing server. The server 402 comprises a network interface 408, a processor 410, and a storage unit 412. The network interface 408 assists in communicating with the client devices 404A-N over the network 406. The processor 410 processes request received from each of the client devices 404A-N and provides response to said each of the client devices 404A-N. The storage unit 412 contains the structural representation database 122, the engineering object database 124, and the parameter attributes database 126. The network 406 may be Local Area Network, Wide Area Network, Wireless Local Area Network, and the like.

The client devices 404A-N may be a tablet computer, a desktop, a laptop, a smart phone, and the like devices. It is appreciated that the client devices 404A-N is an exemplary embodiment of the engineering station 100 of FIG 1. Although not shown, each of the client devices 404A-N may comprise an input module such as keyboard and mouse for providing input instructions, a processor for executing input instructions from a user, a memory for storing machine readable instructions, and a communication module for communicating with the server 102 via the network 106. As shown, each of the client devices 404A-N comprises the engineering application 112 stored in the form of machine-readable instructions on the memory (not shown) and executable by the processor (not shown) of respective client devices 404AN.

The engineering application 112 enables users of the respective client devices 404A-N to create a hardware configuration for use in automation system using recommended structural representations of the hardware configuration as described in

FIG 1. According to the present invention, when the users of respective client devices 404A-N wishes to create desired hardware configuration using the engineering application 112, the client devices 404A-N sends a request for accessing the structural representation database 122, the engineering object database 124, and the parameter attributes database 126 to the server 402 via the network 406. The server 402 provides access to the structural representation database 122, the engineering object database 124, and the parameter attributes database 126. Accordingly, the engineering application 112 on the respective client devices 404A-N accesses the structural representation database 122 and dynamically recommends different structural representations of the hardware configuration being created to the users in response to detected user action (i.e., selection of engineering object) as described in FIG 1. In the distributed control system 400, since the structural representation database 122 resides in the server 402, the client devices 404A-N gets accesses to structural representation created by multiple users of the distributed control system 400. This is because, whenever the engineering application 112 creates or edits a structural representation on respective client devices 404A-N, the engineering application 112 stores the structural representation in the structural representation database 122. Hence, other client devices 404A-N in the distributed control system 400 can get access to the structural representation for creating hardware configuration whenever required.

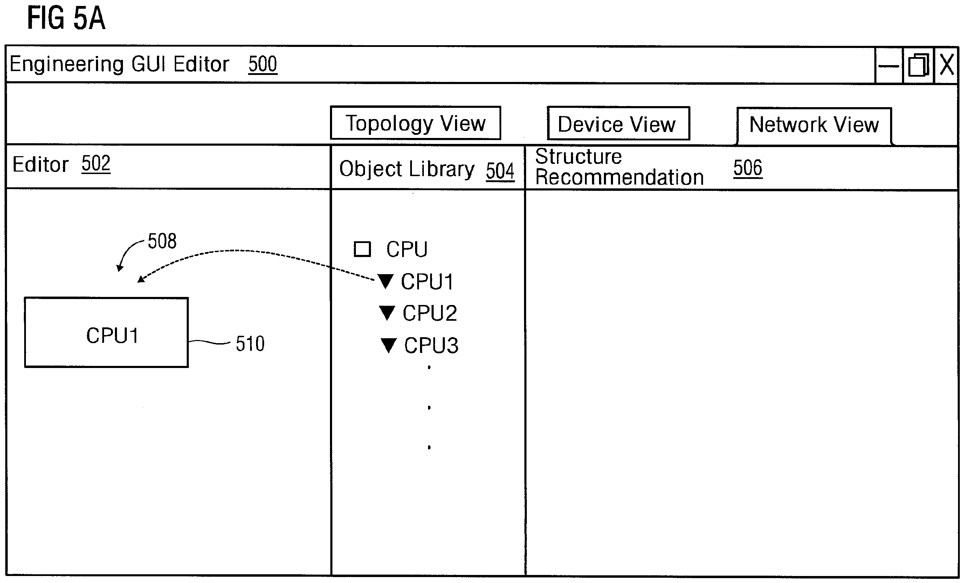

FIGs 5A to 5F are screenshot views illustrating a process of generating a direct data exchange configuration for an automation system according to an embodiment of the present invention. FIG 5A illustrates an engineering GUI editor 500 which enables a user to create a desired hardware configuration 508. As can be seen, the engineering GUI editor 500 comprises an editor window 502, an object library window 504 and a structure recommendation window 506. The editor window 502 displays graphical representation of a desired hardware configuration 508 being created by the user. The object library window 504 displays engineering objects representing various types of hardware devices such as programmable logic controllers, intelligent slave (iSlave), Input/Output (I/O) modules, field devices, etc. These engineering objects displayed in the object library window 504 can be used to create the desired hardware configuration 508. The structure recommendation window 506 displays structural representations recommended for use in the hardware configuration 508 being created. A structure representation is hierarchical structure of the hardware configuration.

Consider that the user selects a CPU 1 510 from the object library window 504 for creating the hardware configuration 508. For example, the user may drag and drop the CPU 1 510 from the object library window 504 to the editor window 502. Accordingly, the CPU 1 510 is displayed in the editor window 502.

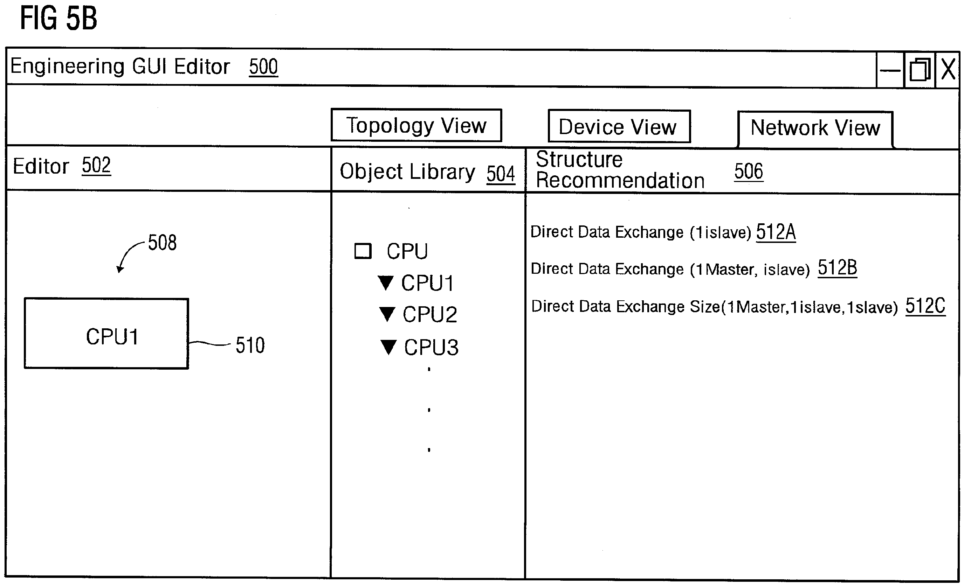

Then, type of the hardware configuration is determined based on pre-defined criteria. For example, the pre-defined criteria may include type of the CPU 1 510, properties of the CPU 1 510, past user activity which indicates which type of hardware configuration were previously created using the CPU 1 510, features of the CPU 1 510 and so on. For the purpose of illustration, consider that the type of hardware configuration is determined based on the past user activity. Also, consider that the past user activity indicates that the direct data exchange type configuration was previously created using the CPU 1 150. Thus, the type of hardware configuration being created is determined as direct data exchange type configuration. Accordingly, structural representation of different direct data exchange configurations 512A-C are displayed in the structure recommendation window 506 as shown in FIG 5B. For example, the structure representations of direct data exchange configuration with one iSlave 512A, direct data exchange configuration with one master CPU and two iSlaves 512B, and direct data exchange configuration with one master CPU, one iSlave, and one slave 512C are recommended in the structure recommendation window 506.

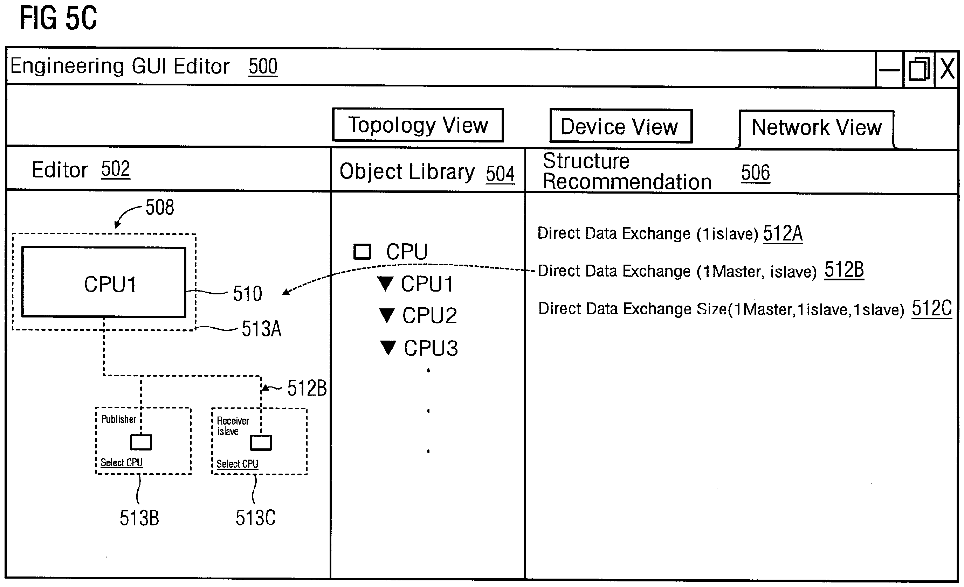

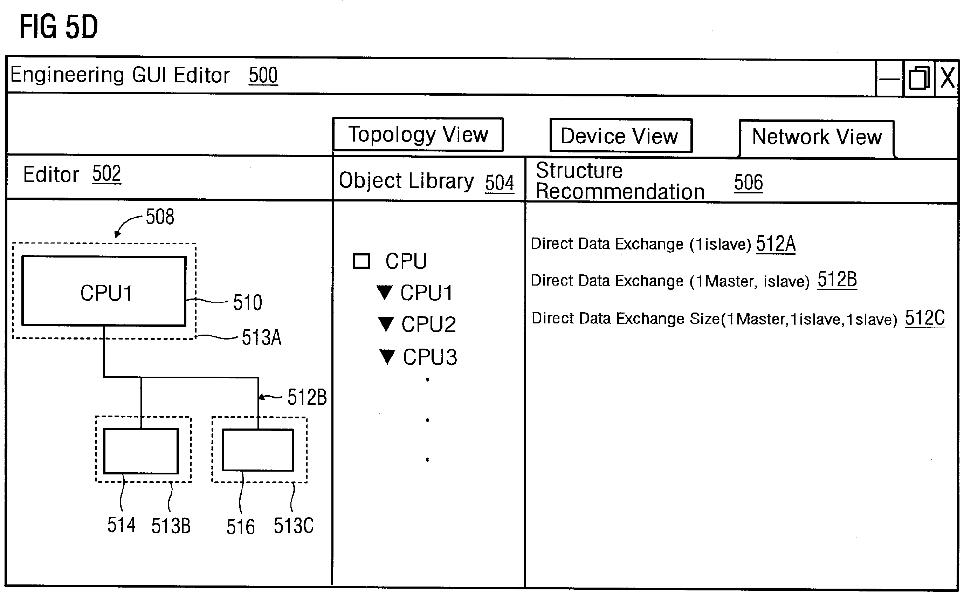

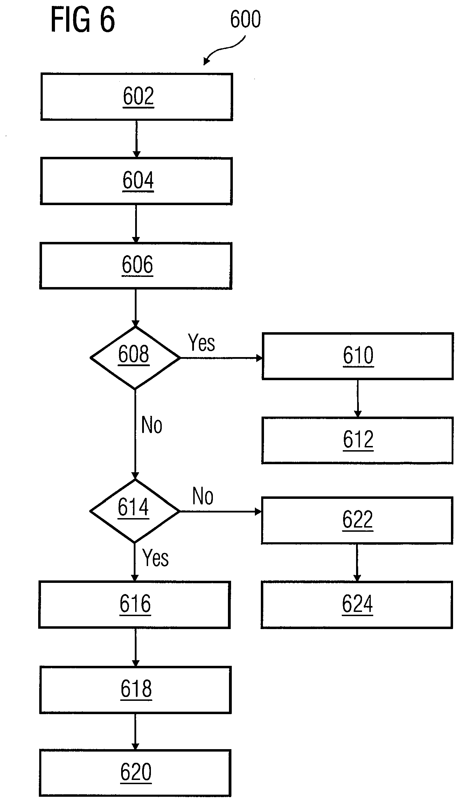

Consider that the user wishes to create a direct data exchange configuration with one master CPU and two iSlaves. Thus, the user selects the structure representation of direct data exchange configuration 512B. For example, the user drags and drops the structural representation 512B from the structure recommendation window 506 to the editor window 502. Accordingly, the structure representation 512B is activated and transferred from the structure recommendation window 506 to the editor window 502. Consequently, the structure representation 512B is displayed as a graphical outline of the direct data exchange configuration with one master CPU and two iSlaves as shown in FIG 5C. It can be seen that the graphical outline comprises a master CPU block 513A, a publisher islave block 513B, and a receiver islave block 513C. The master CPU block 513A is already assigned the CPU 1 510 which was initially selected by the user. As can be seen, iSlaves for the publisher iSlave block 513B and the receiver iSlave block 513C are not selected. The publisher and receiver iSlaves can be selected by clicking on links provided within the publisher iSlave block 513B and the receiver iSlave block 513C. Alternatively, the iSlaves can be selected from the object library window 504 through drag and drop action. FIG 5D shows that the publisher iSlave 514 and the receiver iSlave 516 are assigned to the publisher iSlave block 513B and the receiver iSlave block 513C. Thereafter, values of parameter attributes is set for each of the master CPU, the publisher iSlave and the receiver iSlave. The values of parameter attributes is applied according to anyone of the methods described in FIG 6 and FIG 7.

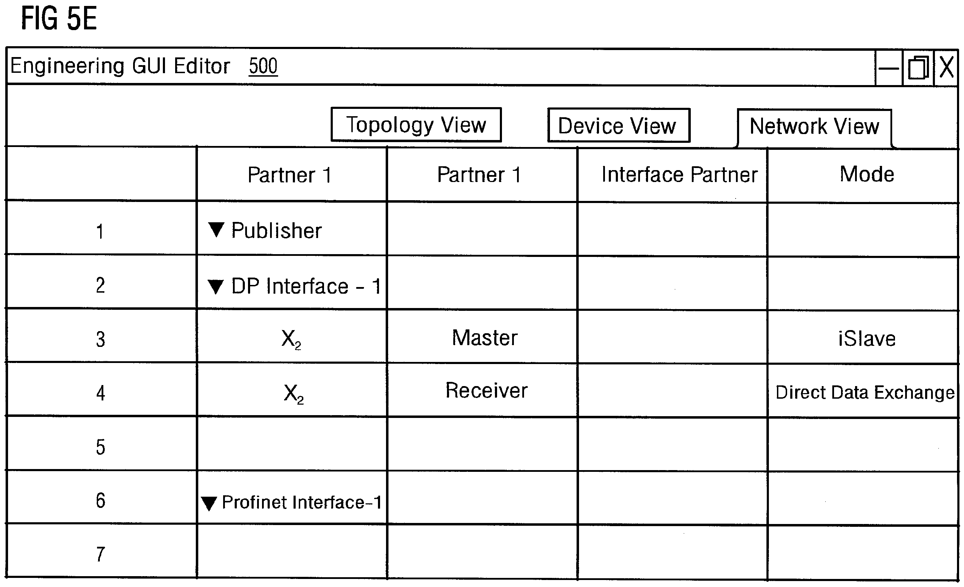

As a next step, direct data exchange is setup between the iSlaves 514 and 516 is setup. Also, direction of data transfer between the iSlaves 514 and 516 is set. In this step, the iSlave '514 is configured as publisher iSlave and the iSlave 516 is configured as receiver iSlave. This is illustrated in FIG 5E.

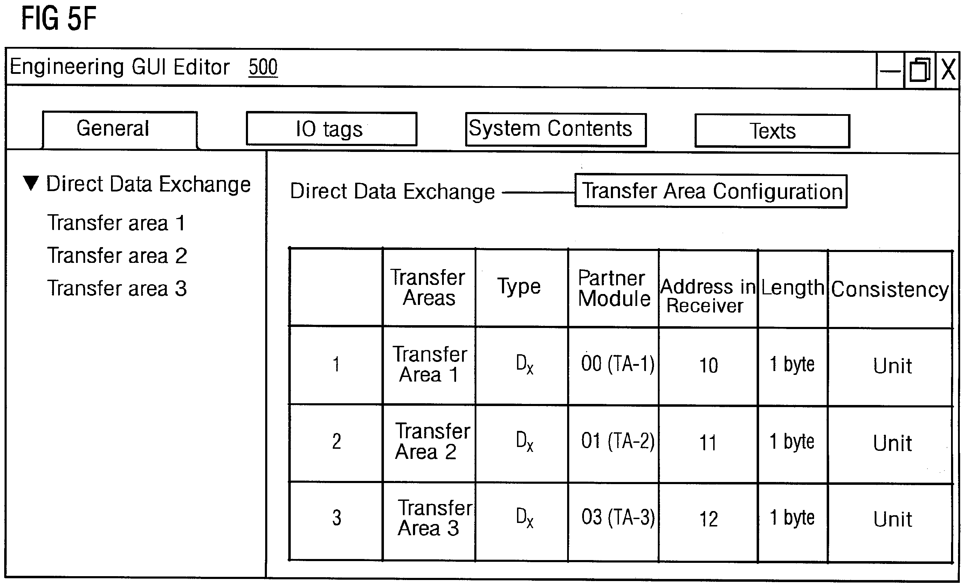

Also, as shown in FIG 5F, transfer areas (i.e., transfer area 1, transfer area 2, and transfer area 3) within each direct data exchange is set. Also, size of data to be transferred, data type and address information of sender and receiver devices are configured for each transfer areas. It is appreciated that, steps illustrated in FIG 5E and FIG 5F are well known in the art and detailed explanation is thereof omitted. In this manner, the direct data exchange type configuration is created using the recommended structural representation. One skilled in the art will understand that the above process can be implemented for creating other types of complex hardware configurations as well as regular hardware configurations.

FIG 6 is a process flowchart 600 illustrating an exemplary method of automatically performing parameterization for a selected hardware device in the hardware configuration being created according to one embodiment of the present invention. At step 602, a list of currently parameterized hardware devices and associated parameter attributes is obtained from the parameter attribute database 126. The currently parameterized hardware devices are hardware devices for which values of parameter attributes are set. It can be noted that, the currently parameterized hardware devices are devices which are part of the same hardware configuration being created or a hardware configuration being created on a different engineering station.

At step 604, the currently parameterized hardware devices are ranked based on number of parameter attributes that best matches with parameter attributes of a hardware device desired to be parameterized. For example, if number of best matching parameter attributes of a currently parameterized hardware device is highest, then such currently parameterized hardware device is ranked highest. On the other hand, if the number of best matching parameter attributes of currently parameterized hardware device is lowest, then such currently parameterized hardware device is ranked lowest.

At step 606, the ranked hardware devices are grouped into one or more groups based on type of the ranked hardware devices. For example, the ranked hardware devices may be grouped into group of same hardware devices, group of similar hardware devices, and group of non-similar hardware devices. The group of same hardware devices may consist of the currently parameterized hardware devices same as the hardware device to be parameterized. The group of similar hardware devices may consist of the currently parameterized hardware devices similar to the hardware device to be parameterized. The group of non-similar hardware devices may consist of the currently parameterized hardware devices which are non-similar to the hardware device to be parameterized.

At step 608, it is determined whether the user wishes to perform complete parameterization. The complete parameterization comprises setting values for entire set of parameter attributes of the hardware device to be parameterized. If the user wishes to perform complete parameterization, then at step 610, a list of currently parameterized hardware devices whose entire parameter attributes best matches with the parameter attributes of the hardware device to be parameterized is provided. The list of currently parameterized hardware devices are sorted according to the rank and grouped as same hardware device, similar hardware device, or non-similar hardware device. At step 612, values of the parameter attributes of the selected hardware device(s) are automatically applied to the hardware device to be parameterized. The values of the parameter attributes of the selected hardware device(s) are pre-stored in the parameter attributes database 126 as mentioned FIG 1. When the user parameterizes the hardware devices during creation of a hardware configuration, the values of the parameter attributes are stored in the parameter attributes database 126 so that the values of the parameter attributes can be reused.

If the user does not wish to perform complete parameterization, then at step 614, it is determined whether the user wishes to perform selective parameterization. If the user wishes to perform selective parameterization, then at step 616, one or more parameter attributes of the hardware device to be parameterized are determined. The one or more parameter attributes are determined so as to perform selective parameterization for the hardware device to be parameterized. The one or more parameter attributes are selected by the user from the set of parameter attributes of the hardware device to be parameterized.

At step 618, a list of currently parameterized hardware devices whose parameter attributes best matches with the selected parameter attributes of the hardware device to be parameterized is displayed on the engineering station 100. The list of currently parameterized hardware devices are sorted according to the rank and grouped as same hardware device, similar hardware device, or non-similar hardware device. At step 620, values of the parameter attributes of the selected hardware device(s) are automatically applied to the selected parameter attributes of the hardware device to be parameterized.

If the user does not wish to perform selective parameterization, then at step 622, a list of currently parameterized hardware devices with percentage of matching parameter attributes is displayed on the engineering station 100. At step 624, values of the parameter attributes of the hardware device selected from the list is applied to the hardware device to be parameterized.

FIG 7 is a process flowchart 700 illustrating an exemplary method of automatically performing parameterization for hardware devices in the hardware configuration being created according to another embodiment of the present invention. At step 702, two or more hardware devices for which values of parameter attributes needs merged are selected. For example, the selected hardware devices comprises at least one hardware device which is already parameterized and at least one hardware device which needs to be parameterized by merging the values of the parameter attributes of the already parameterized hardware device.

At step 704, it is determined whether one or more priorities are available for the already parameterized hardware devices. For example, the priorities may include 'hardware device(s) whose parameter attributes are configured very frequently', 'hardware device(s) whose parameter attributes are configured recently', 'hardware device(s) having most number of parameter attributes configured', and 'hardware device(s) based on its firmware version priority'. If one or more priorities are available for the already parameterized hardware devices, then at step 706, the priorities associated with each of the already parameterized hardware devices are displayed on the engineering station 100. If one or more priorities are not available, then the process is terminated at step 714.

At step 708, it is determined whether any priority is selected for merging parameter attributes of the selected hardware devices. If it is determined whether any priority is selected, then at step 710, the values of the parameter attributes of the already parameterized hardware device is merged with the corresponding parameter attributes of the hardware device which needs to be parameterized based on the selected priority. For example, consider that a hardware device A has highest number of parameter attributes configured and is assigned a highest priority. In such case, parameter attributes of a hardware device B is overwritten using values of the hardware device A's similar parameter attributes since the hardware device is assigned highest priority. If no priority is selected, then the process is terminated at step 714. At step 712, values of the parameter attributes of the hardware device which needs to be parameterized is displayed on the engineering station 100. It can be noted that priority list is updated based on type of priority used during the merge operation.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

## Claims

1. A method of automatically generating a hardware configuration (508) for an automation system, the hardware configuration being a graphical representation of a layout of hardware devices of the automation system, comprising:
determining a type of the hardware configuration (508) being created for the automation system;
identifying at least one structural representation (512A-C) of the hardware configuration (508) from a plurality of structural representations in a structural representation database (122) based on the determined type of the hardware configuration (508), wherein the at least one structural representation (512A-C) is a hierarchical structure of the hardware configuration (508);
obtaining the at least one structural representation (512B) from the structural representation database (122);
generating the hardware configuration (508) according to the at least one structural representation (512B); and
displaying said structural representation (512B) as a graphical outline of the hardware configuration (508) on a graphical user interface, wherein the graphical outline comprises a plurality of blocks (513A-C) representing elements of the hardware configuration (508);
wherein creating the hardware configuration (508) using the at least one structural representation (512B) comprises:
- -activating and transferring said structural representation (512B) of the hardware configuration (508) into an editor window (502) based on a selection of said structural representation (512B) ;
- -assigning appropriate engineering objects (510, 514, 516) to the corresponding blocks (513A, 513B, 513C) of the graphical outline from an object library window (504), wherein the engineering objects (510, 514, 516) represent hardware devices of the automation system; and
- -setting values of a set of parameter attributes associated with each of the hardware devices;
wherein setting the values of the set of parameter attributes associated with said each of the hardware devices comprises:
- -selecting two or more engineering objects in the hardware configuration (508) being created;
- -determining a priority to be applied for merging of values of the set of parameter attributes of the hardware devices corresponding to the two or more engineering objects (510, 514, 516) needs to be performed; and
- -merging values of the set of parameter attributes of the hardware devices according to the determined priority.

2. The method according to claim 1, wherein identifying said at least one structural representation (512A-C) of the hardware configuration (508) comprises identifying said at least one structural representation (512A-C) associated with the type of hardware configuration (508) from the plurality of structural representations.

3. The method according to claim 1, wherein setting the values of the set of parameter attributes associated with said each of the hardware devices comprises determining parameter attributes of one or more hardware devices which best matches with the set of parameter attributes of said each of the hardware devices and applying pre-stored values of the parameter attributes of the one or more hardware devices to the corresponding set of parameter attributes of at least one of the hardware devices.

4. The method according to claim 1, further comprising generating one or more structural representations of hardware configurations and storing the one or more structural representations of the hardware configurations in the structural representation database (122).

5. The method according to claim 1, further comprising editing at least one of the plurality of structural representations stored in the structural representation database (122).

6. An engineering station (100), comprising:
i) a processor (102); and
ii) a memory (104) coupled to the processor (104), wherein the memory (104) comprises an engineering application (112) stored in the form of machine-readable instructions which, when the engineering application (112) is executed by the processor (102), cause the processor (102) to carry out the steps of the method claim 1.

7. The engineering station (100) according to claim 6, wherein the engineering application (112) is capable of identifying said at least one structural representation (512A-C) associated with the type of hardware configuration (508) from the plurality of structural representations.

8. The engineering station (100) according to claim 6, wherein the engineering application (112) is capable of determining parameter attributes of one or more hardware devices which best matches with the set of parameter attributes of said each of the hardware devices and applying pre-stored values of the parameter attributes of the one or more hardware devices to the corresponding set of parameter attributes of at least one of the hardware devices.

9. The engineering station (100) according to claim 6, wherein the engineering application (112) is capable of generating one or more structural representations of hardware configurations and storing the one or more structural representations of the hardware configurations in the structural representation database (122).

## Patentansprüche

1. Verfahren zum automatischen Erzeugen einer Hardware-Konfiguration (508) für ein Automatisierungssystem, wobei die Hardware-Konfiguration eine graphische Darstellung eines Layouts von Hardware-Einrichtungen des Automatisierungssystems ist, das Folgendes umfasst:
Bestimmen eines Typs der Hardware-Konfiguration (508), die für das Automatisierungssystem erstellt wird;
Identifizieren mindestens einer strukturellen Darstellung (512A-C) der Hardware-Konfiguration (508) aus mehreren strukturellen Darstellungen in einer Datenbank (122) struktureller Darstellungen auf der Grundlage des bestimmten Typs der Hardware-Konfiguration (508), wobei die mindestens eine strukturelle Darstellung (512A-C) eine hierarchische Struktur der Hardware-Konfiguration (508) ist;
Erhalten der mindestens einen strukturellen Darstellung (512B) aus der Datenbank (122) struktureller Darstellungen;
Erzeugen der Hardware-Konfiguration (508) gemäß der mindestens einen strukturellen Darstellung (512B) und
Anzeigen der strukturellen Darstellung (512B) als eine graphische Gliederung der Hardware-Konfiguration (508) auf einer graphischen Anwenderschnittstelle, wobei die graphische Gliederung mehrere Blöcke (513A-C), die Elemente der Hardware-Konfiguration (508) repräsentieren, umfasst; wobei
das Erstellen der Hardware-Konfiguration (508) unter Verwendung der mindestens einen strukturellen Darstellung (512B) Folgendes umfasst:
- Aktivieren und Übertragen der strukturellen Darstellung (512B) der Hardware-Konfiguration (508) in ein Editorfenster (502) auf der Grundlage einer Auswahl der strukturellen Darstellung (512B);
- Zuweisen geeigneter technischer Gegenstände (510, 514, 516) zu den entsprechenden Blöcken (513A, 513B, 513C) der graphischen Gliederung von einem Gegenstandsbibliotheksfenster (504), wobei die technischen Gegenstände (510, 514, 516) Hardware-Einrichtungen des Automatisierungssystems repräsentieren; und
- Einstellen von Werten einer Gruppe von Parametereigenschaften, die jeder der Hardware-Einrichtungen zugeordnet sind; wobei
das Einstellen der Werte der Gruppe von Parametereigenschaften, die jeder der Hardware-Einrichtungen zugeordnet sind, Folgendes umfasst:
- Wählen von zwei oder mehr technischen Gegenständen in der Hardware-Konfiguration (508), die erstellt wird;
- ein Bestimmen einer Priorität, die zum Zusammenführen von Werten der Gruppe von Parametereigenschaften der Hardware-Einrichtungen, die den zwei oder mehr technischen Gegenständen (510, 514, 516) entsprechen, angewandt werden soll, muss durchgeführt werden; und
- Zusammenführungswerte der Gruppe von Parametereigenschaften der Hardware-Einrichtungen gemäß der bestimmten Priorität.

2. Verfahren nach Anspruch 1, wobei das Identifizieren der mindestens einen strukturellen Darstellung (512A-C) der Hardware-Konfiguration (508) das Identifizieren der mindestens einen strukturellen Darstellung (512A-C), die dem Typ der Hardware-Konfiguration (508) aus den mehreren strukturellen Darstellungen zugeordnet ist, umfasst.

3. Verfahren nach Anspruch 1, wobei das Einstellen der Werte der Gruppe von Parametereigenschaften, die jeder der Hardware-Einrichtungen zugeordnet sind, das Bestimmen von Parametereigenschaften einer oder mehrerer Hardware-Einrichtungen, die am besten mit der Gruppe von Parametereigenschaften jeder der Hardware-Einrichtungen übereinstimmt, und das Anwenden vorab gespeicherter Werte der Parametereigenschaften der einen oder der mehreren Hardware-Einrichtungen auf die entsprechende Gruppe von Parametereigenschaften mindestens einer der Hardware-Einrichtungen umfasst.

4. Verfahren nach Anspruch 1, das ferner das Erzeugen einer oder mehrerer struktureller Darstellungen von Hardware-Konfigurationen und das Speichern der einen oder der mehreren strukturellen Darstellungen der Hardware-Konfigurationen in der Datenbank (122) struktureller Darstellungen umfasst.

5. Verfahren nach Anspruch 1, das ferner das Bearbeiten mindestens einer der mehreren strukturellen Darstellungen, die in der Datenbank (122) struktureller Darstellungen gespeichert sind, umfasst.

6. Technische Station (100), die Folgendes umfasst:
i) einen Prozessor (102); und
ii) einen Speicher (104), der an den Prozessor (104) gekoppelt ist, wobei der Speicher (104) eine technische Anwendung (112) umfasst, die in Form maschinenlesbarer Anweisungen gespeichert ist, die, wenn die technische Anwendung (112) durch den Prozessor (102) ausgeführt wird, bewirkt, dass der Prozessor (102) die Schritte des Verfahrens nach Anspruch 1 ausführt.

7. Technische Station (100) nach Anspruch 6, wobei die technische Anwendung (112) die mindestens eine strukturelle Darstellung (512A-C), die dem Typ der Hardware-Konfiguration (508) aus den mehreren strukturellen Darstellungen zugeordnet ist, identifizieren kann.

8. Technische Station (100) nach Anspruch 6, wobei die technische Anwendung (112) Parametereigenschaften einer oder mehrerer Hardware-Einrichtungen, die am besten mit der Gruppe von Parametereigenschaften jeder der Hardware-Einrichtungen übereinstimmt, bestimmen und vorab gespeicherte Werte der Parametereigenschaften der einen oder der mehreren Hardware-Einrichtungen auf die entsprechende Gruppe von Parametereigenschaften mindestens einer der Hardware-Einrichtungen anwenden kann.

9. Technische Station (100) nach Anspruch 6, wobei die technische Anwendung (112) eine oder mehrere strukturelle Darstellungen von Hardware-Konfigurationen erzeugen und die eine oder die mehreren strukturellen Darstellungen der Hardware-Konfigurationen in der Datenbank (122) struktureller Darstellungen speichern kann.

## Revendications

1. Procédé de génération automatique d'une configuration matérielle (508) pour un système d'automatisation, la configuration matérielle étant une représentation graphique d'une disposition de dispositifs matériels du système d'automatisation, le procédé comprenant les étapes suivantes :
déterminer le type de la configuration matérielle (508) créée pour le système d'automatisation ;
identifier au moins une représentation structurelle (512A-C) de la configuration matérielle (508) à partir d'une pluralité de représentations structurelles dans une base de données de représentations structurelles (122) sur la base du type déterminé de la configuration matérielle (508), où l'au moins une représentation structurelle (512A-C) est une structure hiérarchique de la configuration matérielle (508) ;
obtenir l'au moins une représentation structurelle (512B) de la base de données de représentations structurelles (122) ;
générer la configuration matérielle (508) selon l'au moins une représentation structurelle (512B) ; et
afficher ladite représentation structurelle (512B) sous la forme d'une représentation graphique de la configuration matérielle (508) sur une interface utilisateur graphique, où la représentation graphique comprend une pluralité de blocs (513A-C) représentant des éléments de la configuration matérielle (508) ;
où la création de la configuration matérielle (508) au moyen de l'au moins une représentation structurelle (512B) comprend les étapes suivantes :
- activer et transférer ladite représentation structurelle (512B) de la configuration matérielle (508) dans une fenêtre d'éditeur (502) sur la base d'une sélection de ladite représentation structurelle (512B) ;
- affecter des objets d'ingénierie appropriés (510, 514, 516) aux blocs correspondants (513A, 513B, 513C) de la représentation graphique depuis une fenêtre de bibliothèque d'objets (504), où les objets d'ingénierie (510, 514, 516) représentent des dispositifs matériels du système d'automatisation ; et
- définir des valeurs d'un ensemble d'attributs de paramètres associés à chacun des dispositifs matériels ;
où la définition des valeurs de l'ensemble d'attributs de paramètres associés audit chacun des dispositifs matériels comprend :
- de sélectionner deux ou plusieurs objets d'ingénierie dans la configuration matérielle (508) étant créée ;
- de déterminer une priorité à appliquer pour la fusion de valeurs de l'ensemble d'attributs de paramètres des dispositifs matériels correspondant aux deux, ou plus, objets d'ingénierie (510, 514, 516) qui doit être effectuée ; et
- de fusionner des valeurs de l'ensemble d'attributs de paramètres des dispositifs matériels en fonction de la priorité déterminée.

2. Procédé selon la revendication 1, dans lequel l'identification de ladite au moins une représentation structurelle (512A-C) de la configuration matérielle (508) comprend l'identification de ladite au moins une représentation structurelle (512A-C) associée au type de configuration matérielle (508) parmi la pluralité de représentations structurelles.

3. Procédé selon la revendication 1, dans lequel la définition des valeurs de l'ensemble d'attributs de paramètres associés audit chacun des dispositifs matériels comprend la détermination des attributs de paramètres d'un ou plusieurs dispositifs matériels qui correspondent le mieux à l'ensemble d'attributs de paramètres dudit chacun des dispositifs matériels et l'application de valeurs préenregistrées des attributs de paramètres des un ou plusieurs dispositifs matériels à l'ensemble correspondant d'attributs de paramètres d'au moins un des dispositifs matériels.

4. Procédé selon la revendication 1, comprenant en outre la génération d'une ou plusieurs représentations structurelles de configurations matérielles et le stockage des une ou plusieurs représentations structurelles des configurations matérielles dans la base de données de représentations structurelles (122).

5. Procédé selon la revendication 1, comprenant en outre l'édition d'au moins une de la pluralité de représentations structurelles stockées dans la base de données de représentations structurelles (122).

6. Station d'ingénierie (100), comprenant :
i) un processeur (102) ; et
ii) une mémoire (104) couplée au processeur (104), où la mémoire (104) comprend une application d'ingénierie (112) stockée sous la forme d'instructions lisibles par machine qui, lorsque l'application d'ingénierie (112) est exécutée par le processeur (102), amènent le processeur (102) à exécuter les étapes de la revendication de procédé 1.

7. Station d'ingénierie (100) selon la revendication 6, dans laquelle l'application d'ingénierie (112) est capable d'identifier ladite au moins une représentation structurelle (512A-C) associée au type de configuration matérielle (508) parmi la pluralité de représentations structurelles.

8. Station d'ingénierie (100) selon la revendication 6, dans laquelle l'application d'ingénierie (112) est capable de déterminer les attributs de paramètres d'un ou plusieurs dispositifs matériels qui correspondent le mieux à l'ensemble d'attributs de paramètres dudit chacun des dispositifs matériels et d'appliquer des valeurs préenregistrées des attributs de paramètres des un ou plusieurs dispositifs matériels à l'ensemble correspondant d'attributs de paramètres d'au moins un des dispositifs matériels.

9. Station d'ingénierie (100) selon la revendication 6, dans laquelle l'application d'ingénierie (112) est capable de générer une ou plusieurs représentations structurelles de configurations matérielles et de stocker les un ou plusieurs représentations structurelles des configurations matérielles dans la base de données de représentations structurelles (122).
